# EUROPEAN PATENT SPECIFICATION

(11) **EP 2 875 794 B1**
(45) Date of publication and mention of the grant of the patent: **13.06.2018**
(21) Application number: 13822963.8
(22) Date of filing: 03.04.2013
(51) Int. Cl.: A61C 17/34, A46B 13/02

(54) **HEAD STRUCTURE OF BRUSH APPLIANCE**
KOPFSTRUKTUR EINER BÜRSTENANWENDUNG
STRUCTURE DE TÊTE D'APPAREIL À BROSSE

(30) Priority: 23.07.2012 CN 201210254085
(43) Date of publication of application: 27.05.2015
(73) Proprietor: Shanghai Shift Electrics Co. Ltd, Shanghai 201506 (CN)
(72) Inventor: DAI, Xiaoguo, Shanghai 201506 (CN); XU, Zhenwu, Shanghai 201506 (CN)
(74) Representative: Eisenführ Speiser
(86) International application number: PCT/CN2013/073728
(87) International publication number: WO 2014/015683

(56) References cited:
- WO-A2-2011/073912
- CN-A- 102 743 016
- US-A- 5 259 083
- US-A- 5 504 958
- US-A1- 2009 049 626

## Description

### Field of the Invention

The present invention relates to a head structure of a brush appliance, in particular to a head structure of a brush appliance such as a toothbrush.

### Background of the Invention

The head structure of a brush appliance is of crucial importance for the cleaning effect and other extended functions of the brush. Therefore, a variety of improvements have been made to the head structure of brush appliance.

US2010/0036656A1 discloses a brush part of an electric toothbrush, which has a head and comprises a frame, a movable contact element retainer, and an extension part of the movable contact element retainer. The frame comprises a plurality of first contact elements supported in it. The movable contact element retainer comprises a plurality of second contact elements supported in it, and is configured to receive the energy for cleaning movement from an electric driver, such that it has at least one free movement in relation to the first contact elements. The extension part of the movable contact element retainer is arranged on the top of the head, with clearance between the extension part and the frame, wherein, the width of at least a first part of the clearance in the side edge area of the head part is smaller than the width of a second part of the clearance in the inner area of the head.

US5259083 and WO2011/073912 disclose head structures of brush appliances.

### Summary of the Invention

The object of the present invention is to provide a head structure of a brush appliance, in particular a head structure of a brush appliance such as a toothbrush, which not only has excellent cleaning effect but also has other secondary functions, such as massaging.

To attain the object described above, according to an aspect of the present invention, the present invention provides a head structure of a brush appliance, comprising: a frame movably connected with a head driving shaft; at least one driving bristle retainer connected with the head driving shaft and driven by the head driving shaft, designed to receive bristles mounted on them; and one or more driven bristle retainers, which and the driving bristle retainers are alternatively arranged with each other, and designed to receive bristles mounted on it/them, wherein, the one or more driven bristle retainers is/are driven by the driving bristle retainers under the constraint of the frame to move around their respective movement axes; at least one of the driving bristles retainers has at least one protrusion on an end surface along its longitudinal axis, and the one or more driven bristle retainers has/have at least one bevel face that cooperates with the protrusions on its/ their end surfaces where the one or more driven bristle retainers is/are driven by the driving bristle retainers; and at least one driven point on at least one of the at least one bevel face is closer to the driving bristle retainer than the contact point, contact line, or contact plane between the bevel face and the corresponding protrusion, such that the driven bristle retainer is driven by the driving bristle retainer in the movement process.

Preferably, the head driving shaft moves as a motor-driven holder driving shaft of the brush appliance moves.

Moreover, the driving bristle retainer may have at least two protrusions that attain effects opposite to each other during operation, and the driven bristle retainer has bevel faces that cooperate with the protrusions on the end face where the driven bristle retainer is driven by the driving bristle retainer. The first protrusion is arranged on an upper end face of the driving bristle retainer in upward direction parallel to the axis of the head driving shaft, and the second protrusion is arranged on a lower end face of the driving bristle retainer opposite to the upper end face, and the first protrusion and second protrusion can be on the same side in relation to the axis of the head driving shaft.

In another embodiment, the driving bristle retainer has at least two protrusions that attain effects opposite to each other during operation, and the driven bristle retainer has bevel faces that cooperate with the protrusions on an end face where the driven bristle retainer is driven by the driving bristle retainer. Both the first protrusion and the second protrusion are arranged on an upper end face of the driving bristle retainer in upward direction parallel to the axis of the head driving shaft, or both of them are arranged on a lower end face of the driving bristle retainer opposite to the upper end face. In addition, the first protrusion and second protrusion are arranged on the upper end face or lower end face on different sides in relation to the axis of the head driving shaft.

Optionally, the driving bristle retainer may have a plurality of protrusions arranged in groups. A first group of protrusions and a second group of protrusions are opposite to each other in protruding direction. The first group of protrusions is arranged on an upper end face of the driving bristle retainer and laterally symmetric in relation to the axis of the head driving shaft, the second group of protrusions is arranged on a lower end face of the driving bristle retainer and laterally symmetric in relation to the axis of the head driving shaft, and the protrusions that are opposite to each other in protruding direction on the same side in relation to the axis of the head driving shaft are symmetric in relation to a plane that contains the center line of the driving bristle retainer in the thickness direction, i.e., the upward or downward direction parallel to the axis of the head driving shaft, and is perpendicular to the axis of the head driving shaft.

According to another aspect of the present invention, the present invention provides a head structure of a brush appliance, comprising: a frame movably connected with a head driving shaft; at least one driving bristle retainer connected with the head driving shaft and driven by the head driving shaft, designed to receive bristles mounted on them; and one or more driven bristle retainers, which and the driving bristle retainers are alternatively arranged with each other, and designed to receive bristles mounted on it/them, wherein, the driven bristle retainers are driven by the driving bristle retainers under the constraint of the frame to move around their respective movement axes; at least one of the driving bristle retainers has at least one bevel face on an end surface along its longitudinal axis, and the one or more driven bristle retainer has/have at least one protrusion that cooperates with the at least one bevel face on its/their end surfaces where the one or more driven bristle retainers is/are driven by the driving bristle retainer; and at least one driven point on at least one of the at least one bevel face is closer to the driving bristle retainer than the contact point, contact line, or contact plane between the bevel face and the corresponding protrusion, such that the one or more driven bristle retainer is/are driven by the driving bristle retainers in the movement process.

In that case, other additional technical features are similar to those in the above-mentioned technical scheme in which the driving bristle retainer has protrusions on an end face and the driven bristle retainer has bevel faces that cooperate with the protrusions on an corresponding end face, with the only difference lying in: the driving bristle retainer has bevel faces on an end face, while the driven bristle retainer has protrusions that cooperate with the bevel faces on an corresponding end face. Preferably, the movement axis of the driven bristle retainer is perpendicular to the axis of the head driving shaft, the driving bristle retainer can swing around the axis of the head driving shaft, and the driven bristle retainers can swing around their respective movement axes.

The driving bristle retainer can revolve by angle γ around the axis of the head driving shaft, and accordingly, the driven bristle retainers can revolve by angle σ around their respective movement axes. The angle γ is 30'∼70', and the angle σ is 1°∼8°. Preferably, the angle γ is 60°, and the angle σ is 4°.

The head structure provided in the present invention is simple and compact, and not only attains excellent cleaning effect but also provides other secondary functions, such as massaging.

### Description of the Drawings

Fig. 1 is a front view of an electric toothbrush.
Fig. 2 is a front view of the brush part, showing a head that comprises a plurality of driving bristle retainers and a plurality of driven bristle retainers.
Fig. 3 is a sectional view of the brush part in Fig. 2 in direction A-A, showing a head driving shaft and bristle retainers, as well as upward direction W₁ and downward direction W₂ parallel to the axis of the head driving shaft, which also represent the thickness direction of the bristle retainers, and rightward direction W₃ and leftward direction W₄ perpendicular to the axis of the head driving shaft, which also represent the width direction of the bristle retainers.
Fig. 4 illustrates the relative movement of the driving bristle retainer and driven bristle retainer.
Fig. 5 is a bottom view illustrating the relative movement of the driving bristle retainer and driven bristle retainer in Fig. 4.
Fig. 6 is a front view, with the driven bristle retainers shown in Fig. 2 removed.
Fig. 7 is a left view corresponding to Fig. 6.
Fig. 8 is a perspective view illustrating the assembling relation between the driving bristle retainer and the head driving shaft.
Fig. 9 is a rear view corresponding to Fig. 8.
Fig. 10 is a front view, with the driving bristle retainers shown in Fig. 2 removed, showing a direction W₅ perpendicular to the axis of the head driving shaft, i.e., the length direction of the bristle retainers.
Fig. 11 is a left view corresponding to Fig. 10.
Fig. 12 is a rear view corresponding to Fig. 10.
Fig. 13 is a perspective view illustrating the assembling relation between the driven bristle retainer and the head driving shaft.
Fig. 14 is a rear view corresponding to Fig. 13.
Fig. 15 is a front view, showing the assembling relation between the brush holder and the driven bristle retainer movement shaft.
Fig. 16 is a sectional view of the structure shown in Fig. 15 in direction B-B.
Fig. 17 is a sectional view of the structure shown in Fig. 15 in direction C-C.

### Brief Description of the Symbols

L₀: axis of the holder driving shaft;
L₁: axis of the head driving shaft;
L₄, L₃, and L₂: movement axes of the first, the second, and the third driven bristle retainers respectively;
L₅: revolving angle β around L₁;
L₆: revolving angle α around L₁;
R₀: moving direction of the holder driving shaft;
R₁: moving direction of the head driving shaft;
R₄, R₃, and R₂: moving directions of the first, the second, and the third driven bristle retainers respectively;
1: electric toothbrush;
10: holder;
11: switch;
12: head driving shaft;
14: holder driving shaft connected with a driving motor;
15: interface;
16: connector;
30: brush part;
32: frame;
23-1, 23-2, 23-3, and 23-4: first, second, third, and fourth driving bristle retainers;
21-1, 21-2, and 21-3: first, second, and third driven bristle retainers;
25: bristles fixed to the driving bristle retainer;
27: bristles fixed to the driven bristle retainer;
233, 234, 235, and 236: protrusions arranged on the upper end face and lower end face of the driving bristle retainer;
213, 214, 215, and 216: bevel faces arranged on the upper end face and lower end face of the driven bristle retainer, corresponding to the movement traces of the protrusions 233, 234, 235, and 236 on the driving bristle retainer;
210: mating face between the driven bristle retainer and the head driving shaft;
211: snap parts on both sides of the driven bristle retainer;
219: movement hole of the driven bristle retainer;
217: side arc surfaces of the snap part of the driven bristle retainer;
218: upper flat surface of the snap part of the driven bristle retainer;
238: arc surface on the edge of the lower part of the driving bristle retainer in W₂ direction;
239: arc surface on the edge of the lower part of the driving bristle retainer in W₁ direction;
321: facet on the cavity bottom of the frame, which contacts with the arc surface on the edge of the lower part of the driving bristle retainer in W₂ direction;
322: facet on the cavity bottom of the frame, which contacts with the arc surface on the edge of the lower part of the driving bristle retainer in W₁ direction;
325: slots on the frame, designed to accommodate the snap parts on both sides of the driven bristle retainer;
326: flat surface of the slot in W₄ direction, corresponding to the upper flat surface of the snap part of the driven bristle retainer;
327: inner curved surface of the slot;
328: movement center hole of the driven bristle retainer on the frame;
329: driven bristle retainer movement shaft

### Detailed Description of the Embodiments

Hereunder some exemplary embodiments of the present invention will be further detailed in the case of an electric toothbrush, with reference to the accompanying drawings. Though the present invention will be described hereunder in the case of an electric toothbrush, the present invention is not limited to that. Apparently, the present invention is also applicable to non-electric toothbrushes or other brushes.

Among the accompanying drawings, similar parts are identified by similar symbols.

For the purpose of clarity, in this specification, terms that represent relative spatial positions such as "up", "down", "upper part", "lower part", "left", and right" are used to describe the positional relationship between one element or feature and another one or more elements or one or more features. "Up", "down", "upper part", and "lower part" are described in relation to the axis of the head driving shaft, the upward direction parallel to the axis of the head driving shaft in a view is defined as "up" or "upper part", while the downward direction parallel to the axis of the head driving shaft in a view is defined as "down" or "lower part". "Left" and right" are described in relation to the axis of the head driving shaft, the direction perpendicular to the axis of the head driving shaft and on the left of the axis of the head driving shaft is defined as "left", and accordingly, the direction perpendicular to the axis of the head driving shaft and on the right of the axis of the head driving shaft is defined as "right".

Though terms "first" and "second" and the like are used to describe a plurality of elements or constituents in this specification, these elements or constituents are not subject to the limitation of those terms. Those terms are only used to differentiate one element or constituent from another, instead of constituting any "order". Therefore, any exchange of the ordinals of those elements or constituents to be discussed below is not beyond the concept and scope of the present invention.

In addition, the term "and/or" used in this patent application covers any combination or all combinations of the listed one or more associated words or phrases.

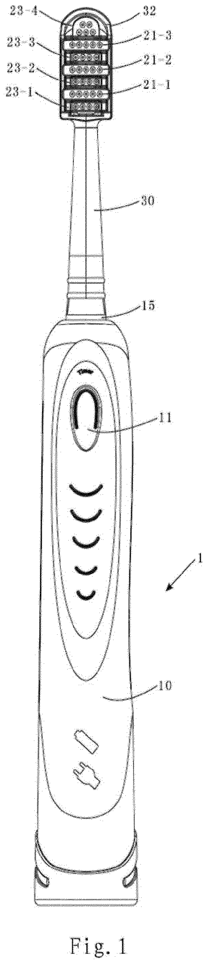

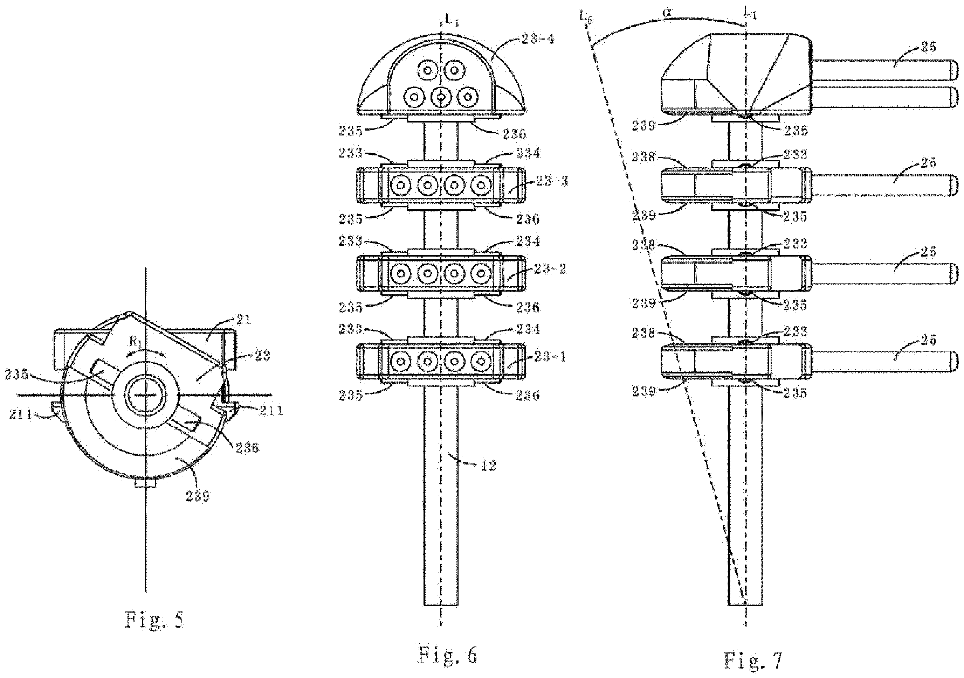

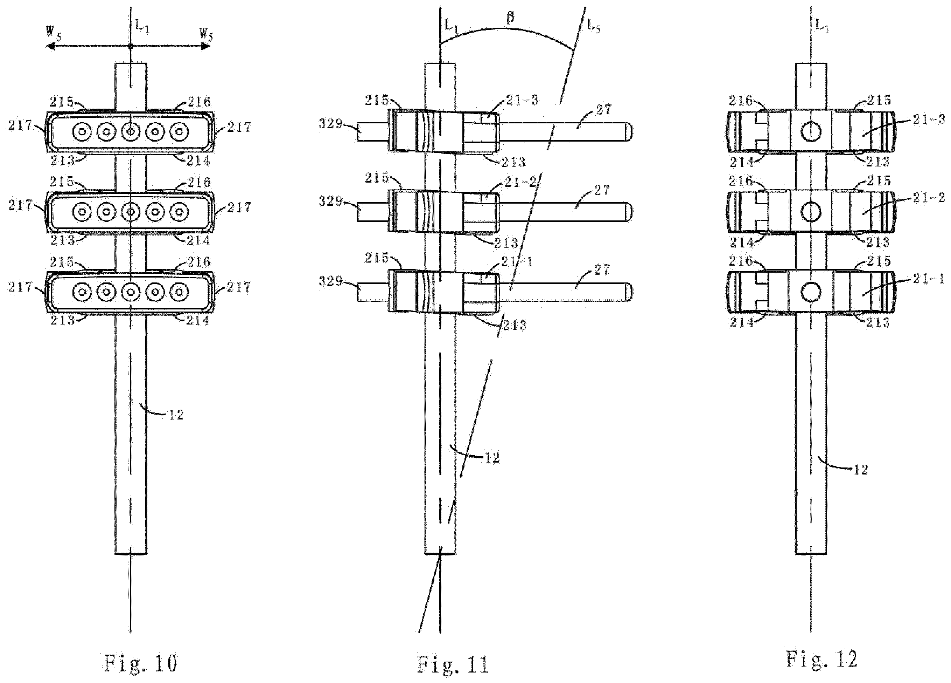

Please see Figs. 1-5, in an embodiment of the present invention, an electric toothbrush 1 comprises a removable brush part 30 and a holder part 10. The removable brush part 30 comprises: a head, a head driving shaft 12, a connector 16, and an interface 15. The head comprises: a frame 32 movably connected with the head driving shaft 12; driving bristle retainers 23-1, 23-2, 23-3, and 23-4; driven bristle retainers 21-1, 21-2, and 21-3; bristles 25 mounted on the driving bristle retainers 23-1, 23-2, 23-3, and 23-4 respectively and bristles 27 mounted on the driven bristle retainer 21-1, 21-2, and 21-3 respectively; and, driven bristle retainer movement shafts 329 (see Fig. 5 and Fig. 11). The driving bristle retainers 23-1, 23-2, 23-3, and 23-4 and the driven bristle retainers 21-1, 21-2, and 21-3 are arranged alternatively. The driven bristle retainers 21-1, 21-2, and 21-3 can receive kinetic energy from the driving bristle retainers 23-1, 23-2, 23-3, and 23-4, and move accordingly. The driven bristle retainer movement shafts 329 are in the same quantity as the driven bristle retainers 21-1, 21-2, and 21-3. The driving bristle retainers 23-1, 23-2, 23-3, and 23-4 and the driven bristle retainers 21-1, 21-2, and 21-3 match in shape, and they can be in any shape. For the convenience of use, the thickness is by far smaller than the width, and the width is smaller than the length. The connector 16 is designed to connect the head driving shaft 12 with the holder driving shaft 14. The head driving shaft 12 swings as the holder driving shaft 14 revolves or swings. The interface 15 is designed to assemble up the brush part 30 and the holder part 10.

As shown in the figures, though the driving bristle retainers are in a quantity of four (i.e., 23-1, 23-2, 23-3, and 23-4) and the driven bristle retainer are in a quantity of three (i.e., 21-1, 21-2, and 21-3) in this embodiment, the driving bristle retainers and driven bristle retainers can be configured as required in terms of the quantity, and they may be in the same quantity or in different quantities (as in the case of this embodiment).

When the user presses a switch 11 (Fig. 1) on the holder 10 of the electric toothbrush, an electric motor (not shown) in the holder 10 of the electric toothbrush 1 will be started to drive the holder driving shaft 14 to move around its axis L₀ (for example, in this embodiment, the holder driving shaft 14 swings around the axis L₀; of course, the holder driving shaft 14 may revolve around the axis L₀, alternatively) via an ordinary transmission mechanism, and the holder driving shaft 14 transfers the kinetic energy via the connector 16 to the head driving shaft 12, such that the head driving shaft 12 moves around its axis L₁. As an example, in this embodiment, the head driving shaft 12 swings around its axis L₁. The head driving shaft 12 runs through all driven bristle retainers 21-1, 21-2, and 21-3 on the head with clearance and are connected with all driving bristle retainers 23-1, 23-2, 23-3, and 23-4 without relative movement; in addition, the head driving shaft 12 is connected with the connector 16 without relative movement. The driving bristle retainers 23-1, 23-2, 23-3, and 23-4 swing as the head driving shaft 12 swings around its axis L₁, and the driving bristle retainers 23-1, 23-2, 23-3, and 23-4 can drive the driven bristle retainers 21-1, 21-2, and 21-3 to swing around their respective movement axes L₄, L₃, and L₂ via the transmission mechanism arranged between the driving bristle retainers 23-1, 23-2, 23-3, and 23-4 and the driven bristle retainers 21-1, 21-2, and 21-3. In this embodiment, the driven bristle retainers 21-1, 21-2, and 21-3 swing around their respective movement axes L₄, L₃, and L₂ perpendicular to the axis L₁ of the head driving shaft 12, such that the bristles 25 fixed on the driving bristle retainers 23-1, 23-2, 23-3, and 23-4 essentially swing around the axis L₁ of the head driving shaft 12 and the bristles 27 fixed on the driven bristle retainers 21-1, 21-2, and 21-3 essentially swing around their respective movement axes L₄, L₃, and L₂.

There is no restriction on the transmission mechanism for the holder 10 in the present invention, which is to say, the transmission mechanism can be any known mechanism that can transfer the kinetic energy of the electric motor to the holder driving shaft 14 to drive the holder driving shaft 14 to move (revolve or swing). Likewise, there is no restriction on the transmission mechanism for the head driving shaft 12 in the present invention, which is to say, the transmission mechanism can be any known mechanism that can transfer the kinetic energy of the holder driving shaft 14 to the head driving shaft 12 to drive the head driving shaft 12 to move (revolve or swing). In this embodiment, the transmission mechanism is a known transmission mechanism that can cause the holder driving shaft 14 and head driving shaft 12 to swing respectively.

In another embodiment, the head driving shaft 12 can be arranged in parallel to the head driving shaft and off-center the axis of the fixed shaft, and can swing around the axis of the fixed shaft. The driving bristle retainer has a hole that is fitted to the fixed shaft and in diameter greater than the diameter of the fixed shaft; thus, the driving bristle retainer is connected with the fixed shaft in a way that it can move in relation to the fixed shaft. The driving bristle retainer is driven by the head driving shaft 12 to swing around the axis of the fixed shaft. The driving bristle retainer has a hole that is fitted to the head driving shaft 12 and in diameter greater than the diameter of the head driving shaft 12; thus, the driving bristle retainer is connected with the head driving shaft 12 in a way that it can move in relation to the head driving shaft 12.

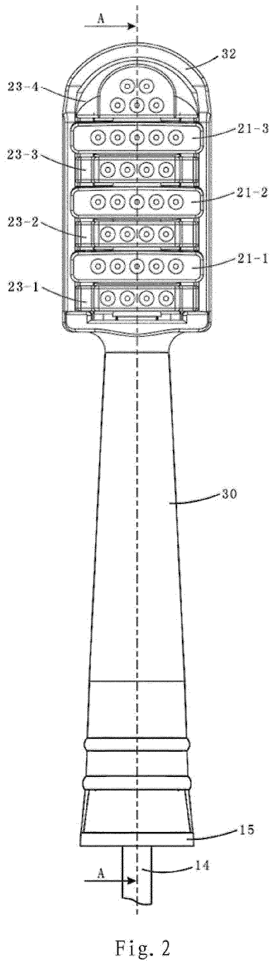

As shown in Figs. 2-5, in this embodiment, the driving bristle retainers 23-1, 23-2, 23-3, and 23-4 can be arranged in a top-to-bottom order in the W₁ direction of the axis L₀ of the holder driving shaft 14, for example, the fourth driving bristle retainer 23-4 can be arranged on the top, the third and the second driving bristle retainers 23-3 and 23-2 can be arranged in succession below the fourth driving bristle retainer 23-4, and the first driven bristle retainer 23-1 can be arranged on the bottom. The bristles 25 can be fixed to the four driving bristle retainers 23-1, 23-2, 23-3, and 23-4 respectively through any industrial brush manufacturing process.

Each of the driving bristle retainers 23-1, 23-2, 23-3, and 23-4 has a hole that can be arranged around the axis L₁ of the head driving shaft 12 and is in a shape matching the cross-sectional shape of the head driving shaft 12 and in dimensions closely fitted with the cross-sectional dimensions of the head driving shaft 12, such that the driving bristle retainers 23-1, 23-2, 23-3, and 23-4 can be connected with the head driving shaft 12 without relative movement when the head driving shaft 12 is fitted into the holes. Preferably, the head driving shaft 12 has a circular cross section, and the holes on the driving bristle retainers 23-1, 23-2, 23-3, and 23-4 are round holes. Of course, the head driving shaft 12 and driving bristle retainers 23-1, 23-2, 23-3, and 23-4 can be formed integrally by injection molding, so as to obtain a connection without relative movement.

Please see Figs. 10-14, similarly, the driven bristle retainers 21-1, 21-2, and 21-3 can be arranged in a top-to-bottom order in the W₁ direction of the axis L₀ of the holder driving shaft 14, for example, the third driven bristle retainer 21-3 can be arranged on the top, the second driven bristle retainer 21-2 can be arrange in the middle, and the first driven bristle retainer 21-1 can be arranged on the bottom. The bristles 27 can be fixed to the three driven bristle retainers 21-1, 21-2, and 21-3 respectively through any industrial brush manufacturing process. Each of the driven bristle retainers 21-1, 21-2, and 21-3 has a hole 210 that can be arranged around the axis L₁ of the head driving shaft 12 and is in a shape matching the cross-sectional shape of the head driving shaft 12 and in dimensions greater than the cross-sectional dimensions of the head driving shaft 12, to ensure that the head driving shaft 12 and the driven bristle retainers 21-1, 21-2, and 21-3 will not interfere with each other in the process of movement.

The driving bristle retainers 23-1, 23-2, 23-3, and 23-4 and the driven bristle retainers 21-1, 21-2, and 21-3 are arranged alternatively.

To enable the driving bristle retainers 23-1, 23-2, 23-3, and 23-4 to transfer the kinetic energy to the corresponding driven bristle retainers 21-1, 21-2, 21-3, for example, in this embodiment, each of the other driving bristle retainers 23-1, 23-2, and 23-3 except for the topmost fourth driving bristle retainer 23-4 has four protrusions, such as a first protrusion 233, a second protrusion 234, a third protrusion 235, and a fourth protrusion 236, wherein, the first protrusion 233 and the second protrusion 234 are arranged on the upper end face of the driving bristle retainer. These protrusions are arranged at intervals respectively on the end face in W₁ direction (i.e., upper end face) of each of the driving bristle retainers 23-1, 23-2, and 23-3 and the end face in W₂ direction (i.e., lower end face). As shown in Fig. 6, the first protrusion 233 and the second protrusion 234 are arranged on the upper end faces of the driving bristle retainer 23-1, 23-2, and 23-3 respectively. More precisely, the first protrusion 233 and the second protrusion 234 are arranged on the upper end face in a way that they are laterally symmetric in relation to the axis L₁ of the head driving shaft 12, i.e., the first protrusion 233 and the second protrusion 234 are configured at 180° to each other on the upper end face. Similarly, the third protrusion 235 and the fourth protrusion 236 are arranged on the lower end faces of the driving bristle retainers 23-1, 23-2, and 23-3 respectively. More precisely, the third protrusion 235 and the fourth protrusion 236 are arranged on the lower end face in a way that they are laterally symmetric in relation to the axis L₁ of the head driving shaft 12, i.e., the third protrusion 235 and the fourth protrusion 236 are configured at 180° to each other on the lower end face. The first protrusion 233 on the upper end face of each driving bristle retainer and the third protrusion 235 on the lower end face of the driving bristle retainer are arranged on the left of the axis L₁, and they are symmetric in relation to a plane that contains the center line of the driving bristle retainer in the thickness direction (i.e., W₁-W₂ direction) and is perpendicular to the axis L₁. The second protrusion 234 on the upper end face of each driving bristle retainer and the fourth protrusion 236 on the lower end face of the driving bristle retainer are arranged on the right of the axis L₁, and they are symmetric in relation to a plane that contains the center line of the driving bristle retainer in the thickness direction and is perpendicular to the axis L₁.

The protrusions 233, 234, 235, and 236 can be fitted as separate parts onto the corresponding end faces respectively, or, they can be formed integrally with the corresponding end faces by injection molding. In addition, there is no restriction on the quantity of the protrusions arranged on the driving bristle retainer; for example, the protrusions can be more than or less than four protrusions. Moreover, the protrusions arranged on different driving bristle retainers can be in the same quantity or in different quantities. For example, in this embodiment, four protrusions 233, 234, 235, and 236 are arranged on the driving bristle retainers 23-1, 23-2, and 23-3 respectively, while only two protrusions 235 and 236 are arranged on the driving bristle retainer 23-4. In addition, these protrusions can be in any shape, for example, they can have a facet or curved surface. Preferably, these protrusions have a partial cylindrical surface respectively.

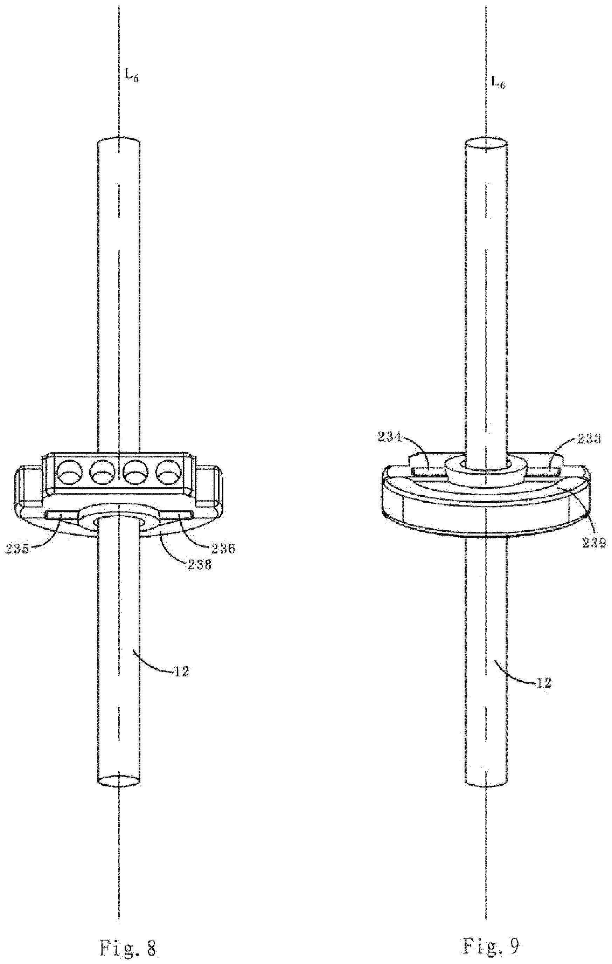

Figs. 6-9 show the relative positions of the protrusions 233, 234, 235, and 236 in detail. As shown in Fig. 7, in this embodiment, delimited by the axis L₁ of the head driving shaft 12 in W₄ direction, the left half of the driving bristle retainer is arranged with arc surfaces, wherein, the arc surface oriented to W₁ direction is denoted as 238, while the arc surface oriented to W₂ direction is denoted as 239. The arc surfaces 238 and 239 are shown more clearly in Fig. 8 and Fig. 9.

To enable the driven bristle retainers 21-1, 21-2, and 21-3 to receive the kinetic energy from the driving bristle retainers 23-1, 23-2, 23-3, and 23-4, in this embodiment, the driven bristle retainers 21-1, 21-2, and 21-3 are arranged with bevel faces at intervals on the end face in W₁ direction (i.e., the upper end face) and the end face in W₂ direction (i.e., the lower end face) respectively, for example, a first bevel face 213, a second bevel face 214, a third bevel face 215, and a fourth bevel face 216. These bevel faces correspond to the movement traces of the corresponding protrusions 233, 234, 235, and 236 on the driving bristle retainer respectively.

As shown in Fig. 10, the first bevel face 213 and the second bevel face 214 are arranged on the lower end faces of the driven bristle retainers 21-1, 21-2, and 21-3 respectively; more precisely, the first bevel face 213 is arranged on the left half of the lower end face delimited by the axis L₁ of the head driving shaft 12, while the second bevel face 214 is arranged on the right half of the lower end face delimited by the axis L₁ of the head driving shaft 12. The third bevel face 215 and the fourth bevel face 216 are arranged on the upper end faces of the driven bristle retainers 21-1, 21-2, and 21-3 respectively; more precisely, the third bevel face 215 is arranged on the left half of the upper end face delimited by the axis L₁ of the head driving shaft 12, while the fourth bevel face 214 is arranged on the right half of the upper end face delimited by the axis L₁ of the head driving shaft 12. The second bevel face 214 and the first bevel face 213 are in symmetric in relation to a plane defined by the axis L₄ and axis L₁, and the third bevel face 214 and the fourth bevel face 213 are in symmetric in relation to the plane defined by the axis L₄ and axis L₁.

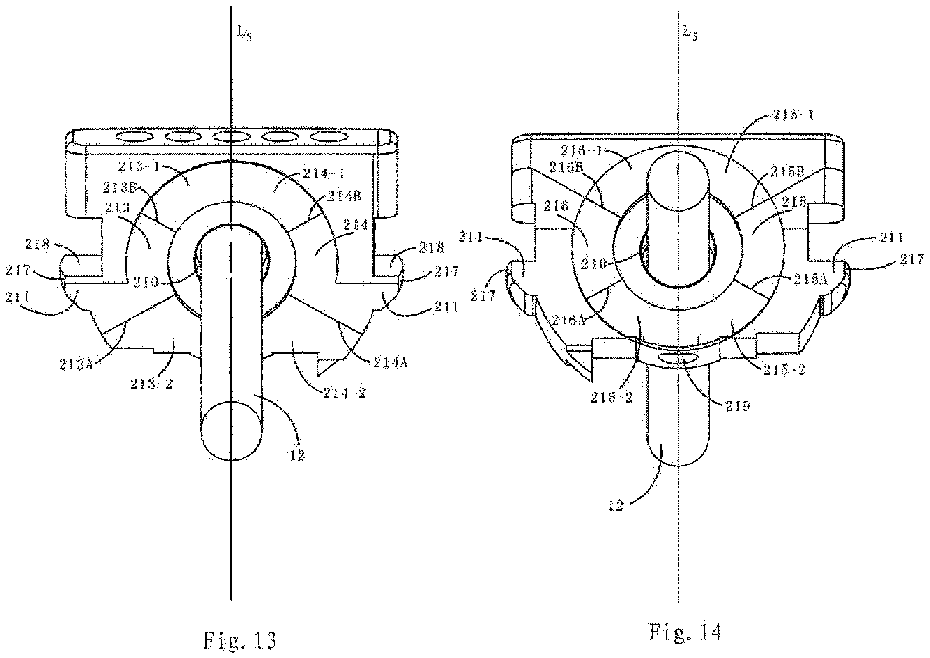

Now, the arrangement of the first bevel face 213 will be described in the case of the driven bristle retainer 21-1. Obviously, the bevel face arrangements on other driven bristle retainers are similar to it. As shown in Fig. 13, with a plane that contains the vertexes of the head structure and is perpendicular to the axis L₁ of the head driving shaft 12 as a reference plane, the lower edge of the first bevel face 213 is defined as a lower start line 213A, while the upper edge of the first bevel face 213 is defined as an upper end line 213B. In this embodiment, the minimum distance from the upper end line 213B of the first bevel face 213 to the reference plane is greater than the minimum distance from the lower start line 213A of the first bevel face 213 to the reference plane, and the difference is denoted as ΔS₂₁₃. That is to say, in W₂ direction, the line 213B is at ΔS₂₁₃ from the line 213A. As shown in Fig. 13, a bevel extension part 213-1 is the upwardly extending part of the first bevel face 213, the edge at one end of the bevel extension part 213-1 is delimited by the line 213B, and the edge at the other end is delimited by a line projected from an axis L₅ at an revolving angle β from the axis L₁ of the head driving shaft 12 on the lower end face in W₂ direction. In this embodiment, the bevel extension part 213-1 is an area scanned by the upper end line 213B of the first bevel face 213 when the upper end line 213B revolves around the axis L₁ of the head driving shaft 12; therefore, the lines formed on the bevel extension part 213-1 by the upper end line 213B on the first bevel face 213 when the upper end line 213B scans are at the same minimum distance to the reference plane as the upper end line 213B on the first bevel face 213.

Likewise, as shown in Fig. 13, a bevel extension part 213-2 is the downwardly extending part of the first bevel face 213. The edge at one end of the bevel extension part 213-2 is delimited by the start line 213A on the first bevel face 213, and the edge at the other end is delimited by a line projected from the axis L₅ at an revolving angle β from the axis L₁ of the head driving shaft 12 on the end face in W₂ direction. In this embodiment, the bevel extension part 213-2 is an area scanned by the start line 213A of the first bevel face 213 when the start line 213A revolves around the axis L₁ of the head driving shaft 12; therefore, the lines formed on the bevel extension part 213-2 by the start line 213A on the first bevel face 213 when the start line 213A scans are at the same minimum distance to the reference plane as the start line 213A on the first bevel face 213. Furthermore, the lower end face has bevel extension parts 214-1, 214-2 of the second bevel face 214.

In this embodiment, the axis L₁ of the head driving shaft 12 is perpendicular to the movement axis L₄ of the first driven bristle retainer 21-1, and the second bevel face 214 and the first bevel face 213 are symmetric in relation to a plane defined by the axis L₁ of the head driving shaft 12 and the movement axis L₄ of the first driven bristle retainer 21-1. The bevel extension part 214-1 and the bevel extension part 213-1 are symmetric in relation to the plane defined by the axis L₁ of the head driving shaft 12 and the movement axis L₄ of the first driven bristle retainer 21-1. The bevel extension part 214-2 and the bevel extension part 213-2 are symmetric in relation to the plane defined by the axis L₁ of the head driving shaft 12 and the movement axis L₄ of the first driven bristle retainer 21-1.

Similarly, the upper end face has a third bevel face 215, a bevel extension part 215-1, a bevel extension part 215-2, a fourth bevel face 216, a bevel extension part 216-1, and a bevel extension part 216-2. As shown in Fig. 10, the third bevel face 215 and the first bevel face 213 are arranged on the upper end face and the lower end face respectively, and the fourth bevel face 216 and the second bevel face 214 are arranged on the upper end face and the lower end face respectively. The third bevel face 215 is arranged on the upper end face of the driven bristle retainer; more precisely, the third bevel face 215 is arranged on the left half of the upper end face delimited by the axis L₁ of the head driving shaft 12. In Fig. 14, it is shown that the third bevel face 215 is arranged on the right half of the upper end face delimited by the axis L₅ at a revolving angle β from the axis L₁ of the head driving shaft 12.

Now, the arrangement of the third bevel face 215 will be described in the case of the driven bristle retainer 21-1. Obviously, the bevel face arrangements on other driven bristle retainers are similar to it. As shown in Fig. 14, with a plane that contains the vertexes of the head structure and is perpendicular to the axis L₁ of the head driving shaft 12 as a reference plane, the lower edge of the third bevel face 215 is defined as a lower start line 215A, while the upper edge of the third bevel face 215 is defined as an upper end line 215B. In this embodiment, the minimum distance from the upper end line 215B of the third bevel face 215 to the reference plane is greater than the minimum distance from the lower start line 215A of the third bevel face 215 to the reference plane, and the difference is denoted as ΔS₂₁₅. That is to say, in W₂ direction, the line 215B is at ΔS₂₁₅ from the line 215A. As shown in Fig. 14, a bevel extension part 215-1 is the upwardly extending part of the third bevel face 215, the edge at one end of the bevel extension part 215-1 is delimited by the line 215B, and the edge at the other end is delimited by a line projected from an axis L₅ at an revolving angle β from the axis L₁ of the head driving shaft 12 on the upper end face in W₁ direction. In this embodiment, the bevel extension part 215-1 is an area scanned by the upper end line 215B of the third bevel face 215 when the upper end line 215B revolves around the axis L₁ of the head driving shaft 12; therefore, the lines formed on the bevel extension part 215-1 by the upper end line 215B on the third bevel face 215 when the upper end line 215B scans are at the same minimum distance to the reference plane as the upper end line 215B on the third bevel face 215.

Likewise, as shown in Fig. 14, a bevel extension part 215-2 is the downwardly extending part of the third bevel face 215. The edge at one end of the bevel extension part 215-2 is delimited by the start line 215A on the third bevel face 215, and the edge at the other end is delimited by a line projected from the axis L₅ at an revolving angle β from the axis L₁ of the head driving shaft 12 on the end face in W₁ direction. In this embodiment, the bevel extension part 215-2 is an area scanned by the start line 215A of the third bevel face 215 when the start line 215A revolves around the axis L₁ of the head driving shaft 12; therefore, the lines formed on the bevel extension part 215-2 by the start line 215A on the third bevel face 215 when the start line 215A scans are at the same minimum distance to the reference plane as the start line 215A on the third bevel face 215.

As shown in Fig. 14, each of the driven bristle retainers 21-1, 21-2, and 21-3 has a driven bristle retainer movement hole 219 on its bottom. The hole 219 is movably fitted with the corresponding driven bristle retainer movement shaft 329, and by the fitting of the holes 219 with the driven bristle retainer movement shafts 329, constrains the driven bristle retainers only to swing around the axes L₂, L₃, and L₄ of the driven bristle retainer movement shafts 329 respectively.

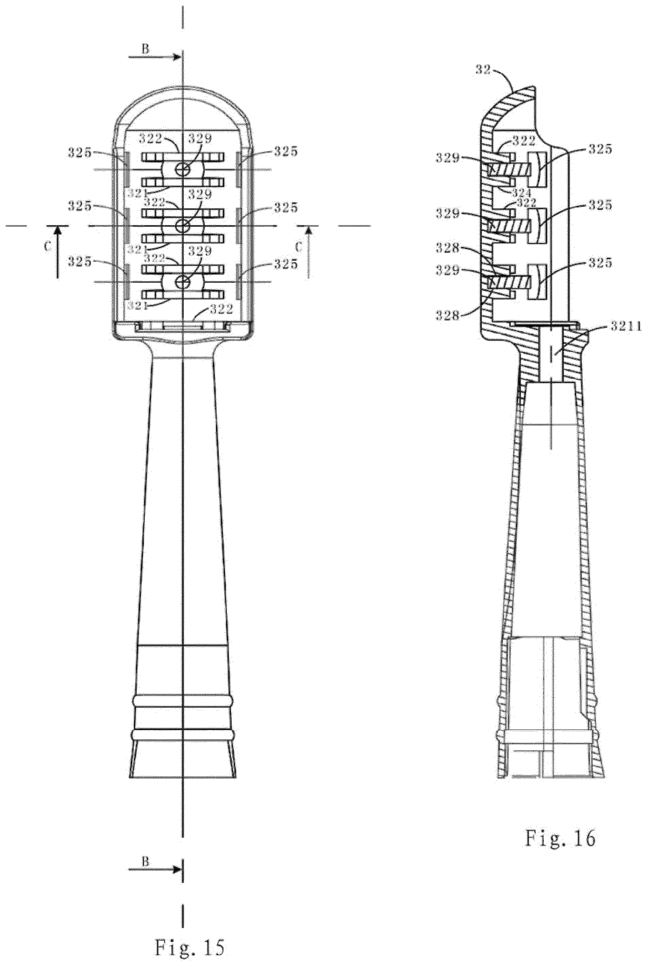

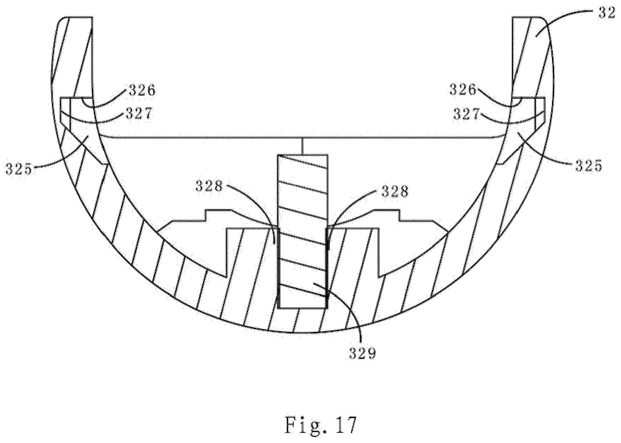

Please see Figs. 13-17. Each of the driven bristle retainers 21-1, 21-2, and 21-3 has snap parts 211 that are arranged symmetrically; the outer side face of each snap part 211 is an arc surface 217, and the arc center of which is on the movement axis L₂, L₃, or L₄ of the corresponding driven bristle retainer 21-1, 21-2, or 21-3. The snap part 211 forms an upper flat surface 218 in W₃ direction, which is fitted with a slot surface 326 (Fig. 17) of the frame, and the upper flat surface 218 and the surface 326 always superpose each other partially in the movement process of the driven bristle retainer; therefore, the movement of the driven bristle retainer in W₃ direction is constrained by the fitting of the flat surface 218 with the surface 326, such that the driven bristle retainer is always constrained in the frame 32 in the entire movement process. The frame 32 has frame slots 325 (shown in Fig. 15), which are designed to accommodate the snap parts 211 of the corresponding driven bristle retainers. Each slot 325 on the frame 32 has an inner curved surface 327 corresponding to the arc surface 217 of the snap part; preferably, the inner curved surface 327 of the slot is an arc surface; preferably, the inner arc surface 327 of the slot shares the same center line with the corresponding arc surface 217 of the snap part when the arc surface 217 of the snap part is fitted with the inner arc surface 327 of the slot. In the movement process of a driven bristle retainer, the inner arc surface 327 of the slot and the arc surface 217 of the snap part always keep appropriate circumferential clearance, for example, the circumferential clearance can be with a range of 0.02mm∼0.08mm.

In another embodiment, the driven bristle retainer movement holes 219 and the driven bristle retainer movement shafts 329 can be omitted. In such a case, the driven bristle retainers can be constrained to swing only around their respective movement axes L₂, L₃, and L₄, by means of the inner arc surfaces 327 of the slots and the arc surfaces 217 of the snap parts that are concentric with each other. In that case, preferably the circumferential clearance between the inner arc surface 327 of the slot and the arc surface 217 of the snap part is 0.02mm∼0.05mm.

As shown in Fig. 15 and Fig. 16, the frame 32 has center blind holes 328 for movement of the driven bristle retainers, which are in the same quantity as the driven bristle retainers; the centers of the holes are on the corresponding movement axes L₂, L₃, and L₄ respectively. As shown in Fig. 16, the corresponding driven bristle retainer movement shaft 329, driven bristle retainer movement center hole 328, and driven bristle retainer movement hole 219 share the same axis. The driven bristle retainer movement center hole 328 is tightly fitted with the driven bristle retainer movement shaft 329, to ensure that the driven bristle retainer movement shaft 329 is connected with the driven bristle retainer movement center hole 328 without relative movement. Of course, they can be formed integrally by injection molding.

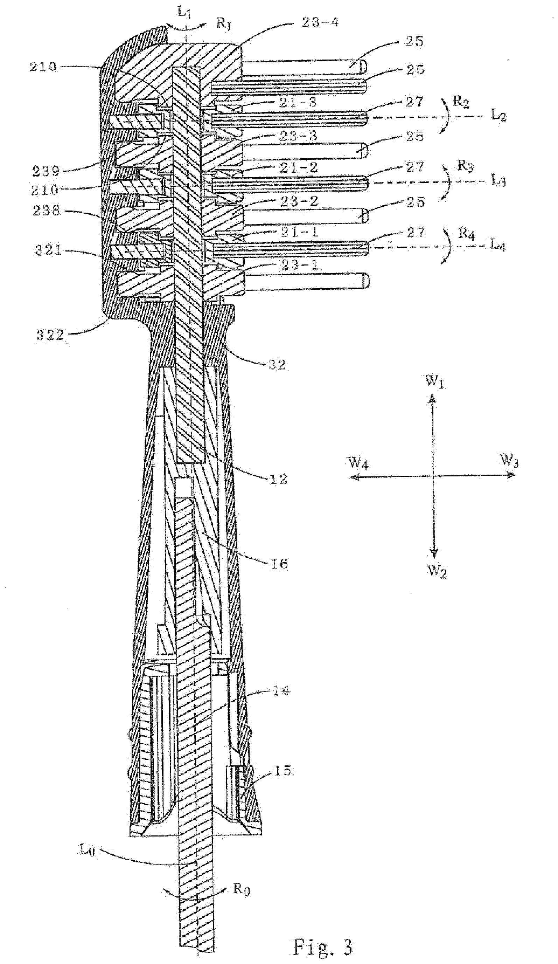

As shown in Fig. 3, the frame 32 further comprises driving bristle retainer movement constraining planes that are in the same quantity as the driving bristle retainers. Among these driving bristle retainer movement constraining planes, the planes in W₁ direction are denoted, for example, as 322, and the planes in W₂ direction are denoted, for example, as 321. Each pair of constraining planes 322 and 321 that face each other accommodates a driving bristle retainer. The constraining plane 321 corresponds to the arc surfaces 239 on the edge of the lower part of the driving bristle retainer in W₁ direction, and the circumferential clearance between the constraining plane 321 and the arc surface 239 can be within a range of 0.03mm∼0.05mm, for example. The constraining plane 322 corresponds to the arc surfaces 238 on the edge of the lower part of the driving bristle retainer in W₂ direction, and preferably the circumferential clearance between the constraining plane 322 and the arc surface 238 is 0.03mm∼0.05mm. The constraining planes 321 and 322 can constrain any excessive movement of the driving bristle retainer in W₁ direction or W₂ direction.

As shown in Fig. 16, the frame 32 has a head driving shaft hole 3211, which share the same axis with the head driving shaft 12 and is in diameter slightly larger than the diameter of the head driving shaft 12, such that the head driving shaft 12 can move in relation to the head driving shaft hole 3211 with clearance. The head driving shaft 12 can be in any shape, preferably cylindrical shape, and in that case, the head driving shaft hole 3211 is a round hole. Preferably the diameter of the head driving shaft hole 3211 is larger than the diameter of the head driving shaft 12, for example, by 0.04mm∼0.09mm.

### Movement analysis

As shown in the figures, when the first protrusion 233 on the driving bristle retainer 23-1 is fitted with the lower start line 213A of the first bevel face 213 of the driven bristle retainer 21-1, the second protrusion 234 on the driving bristle retainer 23-1 will be fitted with the upper end line 214B of the second bevel face 214 of the driven bristle retainer 21-1, the third protrusion 235 on the driving bristle retainer 23-2 will be fitted with the lower start line 215A of the third bevel face 215 of the driven bristle retainer 21-1, and the fourth protrusion 236 on the driving bristle retainer 23-2 will be fitted with the upper end line 216B of the fourth bevel face 216 of the driven bristle retainer 21-1.

When the first protrusion 233 on the driving bristle retainer 23-2 is fitted with the lower start line 213A of the first bevel face 213 of the driven bristle retainer 21-2, the second protrusion 234 on the driving bristle retainer 23-2 will be fitted with the upper end line 214B of the second bevel face 214 of the driven bristle retainer 21-2, the third protrusion 235 on the driving bristle retainer 23-3 will be fitted with the lower start line 215A of the third bevel face 215 of the driven bristle retainer 21-2, and the fourth protrusion 236 on the driving bristle retainer 23-3 will be fitted with the upper end line 216B of the fourth bevel face 216 of the driven bristle retainer 21-2.

When the first protrusion 233 on the driving bristle retainer 23-3 is fitted with the lower start line 213A of the first bevel face 213 of the driven bristle retainer 21-3, the second protrusion 234 on the driving bristle retainer 23-3 will be fitted with the upper end line 214B of the second bevel face 214 of the driven bristle retainer 21-3, the third protrusion 235 on the driving bristle retainer 23-4 will be fitted with the lower start line 215A of the third bevel face 215 of the driven bristle retainer 21-3, and the fourth protrusion 236 on the driving bristle retainer 23-4 will be fitted with the upper end line 216B of the fourth bevel face 216 of the driven bristle retainer 21-3.

Now, the analysis will be made in the case of the driven bristle retainer 21-1. When the driving bristle retainers 23-1, 23-2, 23-3, and 23-4 are driven by the head driving shaft 12 to move in clockwise direction (e.g., revolve by 60°) around the axis L₁, the first protrusion 233 on the driving bristle retainer 23-1 will move along the driven bristle retainer 21-1 in a direction from the lower start line 213A of the first bevel face 213 to the upper end line 213B of the first bevel face 213. Since there is a difference ΔS₂₁₃ between the upper end line 213B and the lower start line 213A (i.e., the upper end line 213B is closer to the driving bristle retainer 23-1) and the movement of the driven bristle retainer 21-1 is constrained by the driven bristle retainer movement shaft 329 (i.e., the driven bristle retainer 21-1 can only swing around the axis L₄ of the driven bristle retainer movement shaft 329, the driven bristle retainer 21-1 can be driven the to move around the axis L₄ in clockwise direction under the synergistic action of the first protrusion 233 of the driving bristle retainer 23-1 and the first bevel face 213 of the driven bristle retainer 21-1, as the driving bristle retainer 23-1 swings.

When the first protrusion 233 on the driving bristle retainer 23-1 moves along the driven bristle retainer 21-1 from the lower start line 213A of the first bevel face 213 to the upper end line 213B, the driving bristle retainer 23-1 will revolve in clockwise direction around the axis L₁ by an angle y, which may be 30°∼70°, preferably 60°. Accordingly, the driven bristle retainer 21-1 will revolve in clockwise direction around the axis L₄ by an angle σ, which may be approximately 1°∼8°, preferably 4°. The size of the angle σ depends on the size of ΔS₂₁₃, which is to say, the greater the ΔS₂₁₃ is, the greater the angle σ will be. The functional relationship (σ=f(γ)) between the angle σ and the angle γ can be set as required, and these changes are not beyond the scope of the present invention.

Likewise, when the fourth protrusion 236 on the driving bristle retainer 23-2 moves along the driven bristle retainer 21-1 from the upper end line 216B of the fourth bevel face 216 to the lower start line 216A, the fourth protrusion 236 on the driving bristle retainer 23-2 will attain the same effect as the first protrusion 233 on the driving bristle retainer 23-1, and the driving bristle retainer 23-2 will revolve in clockwise direction around axis L₁ by an angle γ. Accordingly, the driven bristle retainer 21-1 will revolve in clockwise direction around the axis L₄ by an angle σ. Similarly, the size of the angle σ depends on the size of ΔS₂₁₆. In this embodiment, ΔS₂₁₆=ΔS₂₁₃; therefore, σ=4° when γ=60°.

It is seen from the analysis of the relationship between the second protrusion 234 on the driving bristle retainer 23-1 and the second bevel face 214 of the driven bristle retainer 21-1: the second protrusion 234 on the driving bristle retainer 23-1 moves along the second bevel face 214 of the driven bristle retainer 21-1 from the upper end line 214B to the lower start line 214A. Since there is a difference ΔS₂₁₄ between the upper end line 214B and the lower start line 214A (i.e., the upper end line 214B is closer to the driving bristle retainer 23-1) and the second bevel face 214 and first bevel face 213 of the driven bristle retainer 21-1 are symmetric in relation to the plane defined by the axis L₄ and the axis L₁, the second bevel face 214 of the driven bristle retainer 21-1 permits the driven bristle retainer 21-1 to revolve around the movement axis L₄ by an angle σ₁, when the first protrusion 233 of the driving bristle retainer 23-1 moves in clockwise direction and drives the driven bristle retainer 21-1 to revolve around axis L₄ by the angle σ₁. That is to say, in the movement process, the second protrusion 234 doesn't interfere with the driven bristle retainer 21-1. i.e., the second bevel face 214 of the driven bristle retainer 21-1 will not hamper the movement of the driven bristle retainer 21-1. When the first protrusion 233 of the driving bristle retainer 23-1 stops at the upper end line 213B, the second protrusion 234 of the driving bristle retainer 23-1 will stop at the lower start line 214A.

Similarly, the relationship between the third protrusion 235 of the driving bristle retainer 23-2 and the third bevel face 215 of the driven bristle retainer 21-1 can be analyzed. The kinematic relation between the third protrusion 235 of the driving bristle retainer 23-2 and the third bevel face 215 of the driven bristle retainer 21-1 is the same as the kinematic relation between the second protrusion 234 of the driving bristle retainer 23-1 and the second bevel face 214 of the driven bristle retainer 21-1, and they attain the same effect.

It is seen from above analysis: when the first protrusion 233 of the driving bristle retainer is fitted with the lower start line 213A of the first bevel face 213 of the driven bristle retainer 21-1, the driving bristle retainer will begin to move around the axis L₁ in clockwise direction, and either or both of the first protrusion 233 on the driving bristle retainer 23-1 and the fourth protrusion 236 on the driving bristle retainer 23-2 will drive the driven bristle retainer 21-1 to move around the axis L₄ in clockwise direction; under the synergistic action of the second protrusion 234 of the driving bristle retainer 23-1 and the second bevel face 214 of the driven bristle retainer 21-1 and the synergistic action of the third protrusion 235 of the driving bristle retainer 23-2 and the third bevel face 215 of the driven bristle retainer 21-1, any interference with the movement of the driven bristle retainer 21-1 in clockwise direction can be effectively avoided.

Similarly, it is seen from above analysis: when the second protrusion 234 of the driving bristle retainer 23-1 is fitted with the lower start line 214A of the second bevel face 214 of the driven bristle retainer 21-1, the driving bristle retainer 23-1 will begin to move around the axis L₁ in counter-clockwise direction, and either or both of the second protrusion 234 on the driving bristle retainer 23-1 and the third protrusion 235 on the driving bristle retainer 23-2 will drive the driven bristle retainer 21-1 to move around the axis L₄ in counter-clockwise direction; under the synergistic action of the first protrusion 233 of the driving bristle retainer 23-1 and the first bevel face 213 of the driven bristle retainer 21-1 and the synergistic action of the fourth protrusion 236 of the driving bristle retainer 23-2 and the fourth bevel face 216 of the driven bristle retainer 21-1, any interference with the movement of the driven bristle retainer 21-1 can be effectively avoided.

The kinematic relation between any other driving bristle retainer and corresponding driven bristle retainer is the same as that described above, and for conciseness, will not be further detailed here.

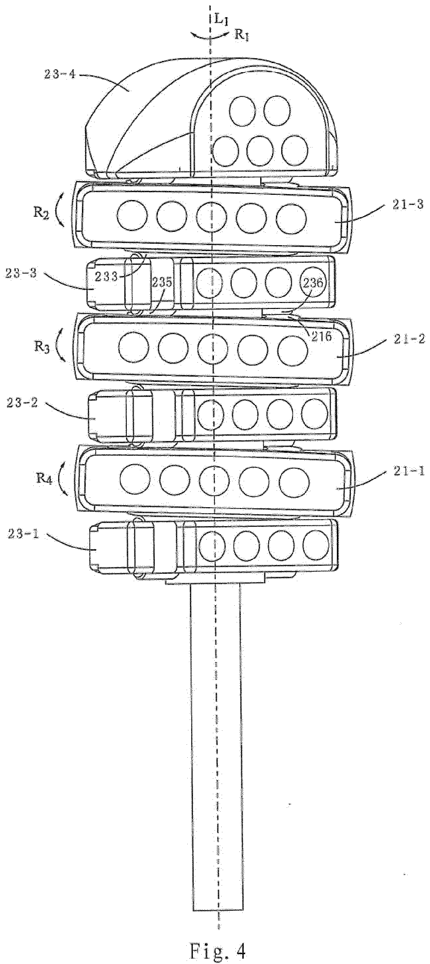

When the first protrusion 233 of the driving bristle retainer is fitted with the upper end line 213B of the first bevel face 213 of the corresponding driven bristle retainer, the driving bristle retainers, driven bristle retainers, and head driving shaft 12 are in a motion state as shown in Fig. 4 and Fig. 5.

Likewise, when the driving bristle retainer moves around the axis L₁ in counter-clockwise direction, the second protrusion 234 and third protrusion 235 of the driving bristle retainer will drive the driven bristle retainer to move around the axis L₄ (or L₂ or L₃) in counter-clockwise direction; under the synergistic action of the first protrusion 233 of the driving bristle retainer and the first bevel face 213 of the driven bristle retainer and the synergistic action of the fourth protrusion 236 of the driving bristle retainer and the fourth bevel face 216 of the driven bristle retainer, any interference with the movement of the driven bristle retainer in counter-clockwise direction can be effectively avoided. Therefore, the third protrusion 235 of the driving bristle retainer attains the same effect as the second protrusion 234, and the fourth protrusion 236 attains the same effect as the first protrusion 233, whereas the effect of the third protrusion 235 or second protrusion 234 of the driving bristle retainer is opposite to the effect of the first protrusion 233 or fourth protrusion 236 of the driving bristle retainer during the operation.

In the present invention, with multiple groups of protrusions that are opposite in direction and a plurality of bevel faces that cooperate with the protrusions, the driven bristle retainers can move around their axes (e.g., L₂, L₃, or L₄) smoothly to and fro. Preferably, the movement axes (e.g., L₂, L₃, or L₄) of the driven bristle retainer are perpendicular to the axis L₁ of the head driving shaft, as shown in Fig. 3.

Furthermore, the movement axes of the driven bristle retainers can be arranged to be parallel to or superpose the axis L₁ of the head driving shaft or to be at any included angle from the axis L₁ of the head driving shaft.

Though the present invention is described above exemplarily in a case that the driving bristle retainers have protrusions arranged symmetrically and the driven bristle retainers have bevel faces arranged symmetrically, it should be appreciated that the protrusions on the driving bristle retainers and the bevel faces on the driven bristle retainers can be arranged in a non-symmetric pattern, as long as the protrusions and/or bevel faces don't hinder the movement of the driven bristle retainers when the driving bristle retainers drive the driven bristle retainers to move around their movement axes in clockwise or counter-clockwise direction under the synergistic action of the protrusions and the bevel faces.

As another embodiment, bevel faces can be arranged on the driving bristle retainers, while corresponding protrusions can be arranged on the driven bristle retainers. In such a case, the bevel faces are actuating parts, while the protrusions are driven parts; however, the kinematic relation between the bevel faces and the protrusions is similar to the kinematic relation described in the above embodiment, and for conciseness, will not be detailed further here.

Though the present invention is described in the embodiments exemplarily in a case of an electric toothbrush, the present invention is not limited to that; in other words, the present invention is also applicable to non-electric toothbrushes or other brushes.

## Claims

1. A head structure of a brush appliance, comprising:
a frame (32) movably connected with a head driving shaft (12); at least one driving bristle retainer (23-1, 23-2, 23-3, 23-4) connected with the head driving shaft (12) and driven by the head driving shaft, designed to receive bristles (25, 27) mounted on them; and
one or more driven bristle retainers (21-1, 21-2, 21-3), which and the driving bristle retainers (23-1, 23-2, 23-3, 23-4) are alternatively arranged with each other, and designed to receive bristles (25, 27) mounted on it/them,
wherein, the one or more driven bristle retainers is/are driven by the driving bristle retainers under the constraint of the frame (32) to move around their respective movement axes; at least one of the driving bristles retainers has at least one protrusion (233, 234, 235, 236) on an end surface along its longitudinal axis, and the one or more driven bristle retainers has/have at least one bevel face (213, 214, 215, 216) that cooperates with the protrusions on its/ their end surfaces where the one or more driven bristle retainers is/are driven by the driving bristle retainers; and at least one driven point on at least one of the at least one bevel face is closer to the driving bristle retainer than the contact point, contact line, or contact plane between the bevel face and the corresponding protrusion, such that the driven bristle retainer (21-1, 21-2, 21-3) is driven by the driving bristle retainer (23-1, 23-2, 23-3, 23-4) in the movement process.

2. The head structure as described in claim 1, wherein, the head driving shaft moves as the holder driving shaft of the brush appliance is driven by an electric motor to move.

3. The head structure as described in claim 1 or 2,
wherein at least two protrusions that attain effects opposite to each other during the operation are arranged on the end surface of the driving bristle retainer, and bevel faces that cooperate with the protrusions are arranged on the corresponding end surface of the driven bristle retainer driven by the driving bristle retainer;
wherein the first protrusion is arranged on an upper end face of the driving bristle retainer in upward direction parallel to the axis of the head driving shaft, the second protrusion is arranged on a lower end face of the driving bristle retainer opposite to the upper end face, and both of the first protrusion and the second protrusion are on the same side in relation to the axis of the head driving shaft; and
wherein when the first protrusion cooperates with the corresponding bevel face arranged on the corresponding driven bristle retainer to drive the driven bristle retainer to move, the second protrusion will cooperate with the corresponding bevel face arranged on the corresponding driven bristle retainer, without interference with the movement of the driven bristle retainer.

4. The head structure as described in claim 1 or 2,
wherein at least two protrusions that attain effects opposite to each other during the operation are arranged on the end surface of the driving bristle retainer, and bevel faces that cooperate with the protrusions are arranged on the corresponding end surface of the driven bristle retainer driven by the driving bristle retainer;
wherein both of the first protrusion and the second protrusion are arranged on an upper end face of the driving bristle retainer in upward direction parallel to the axis of the head driving shaft or both of them are arranged on a lower end face of the driving bristle retainer opposite to the upper end face, and the first protrusion and the second protrusion arranged on the upper end face or the lower end face are on different sides in relation to the axis of the head driving shaft; and
wherein when the first protrusion and the corresponding bevel face arranged on the corresponding driven bristle retainer cooperate to drive the driven bristle retainer to move, the second protrusion and the corresponding bevel face arranged on the corresponding driven bristle retainer cooperate, without interference with the movement of the driven bristle retainer.

5. The head structure as described in claim 1 or 2,
wherein the driving bristle retainer has a plurality of protrusions in groups;
wherein the first group of protrusions is opposite in protruding direction to the second group of protrusions;
wherein the first group of protrusions is arranged on an upper end face of the driving bristle retainer in upward direction parallel to the axis of the head driving shaft, in bilateral symmetry in relation to the axis of the head driving shaft, while the second group of protrusions is arranged on a lower end face of the driving bristle retainer opposite to the upper end face, in bilateral symmetry in relation to the axis of the head driving shaft; and
wherein in the first group and second group of protrusions, the protrusions that are opposite in protruding direction to each other and on the same side in relation to the axis of the head driving shaft are symmetric in relation to a plane that contains the center line of the corresponding driving bristle retainer in the thickness direction, i.e., the upward or downward direction parallel to the axis of the head driving shaft, and is perpendicular to the axis of the head driving shaft.

6. A head structure of a brush appliance, comprising:
a frame (32) movably connected with a head driving shaft (12); at least one driving bristle retainer (23-1, 23-2, 23-3, 23-4) connected with the head driving shaft and driven by the head driving shaft, designed to receive bristles (25, 27) mounted on them; and
one or more driven bristle retainers (21-1, 21-2, 21-3, 21-4), which and the driving bristle retainers are alternatively arranged with each other, and designed to receive bristles mounted on it/them,
wherein, the driven bristle retainers are driven by the driving bristle retainers under the constraint of the frame to move around their respective movement axes; at least one of the driving bristle retainers has at least one bevel face (213, 214, 215, 216) on an end surface along its longitudinal axis, and the one or more driven bristle retainer has/have at least one protrusion (233, 234, 235, 236) that cooperates with the at least one bevel face on its/their end surfaces where the one or more driven bristle retainers is/are driven by the driving bristle retainer; and at least one driven point on at least one of the at least one bevel face is closer to the driving bristle retainer than the contact point, contact line, or contact plane between the bevel face and the corresponding protrusion, such that the one or more driven bristle retainer is/are driven by the driving bristle retainers in the movement process.

7. The head structure as described in claim 6, wherein, the head driving shaft moves as the holder driving shaft of the brush appliance is driven by an electric motor to move.

8. The head structure as described in claim 6 or 7,
wherein at least two bevel faces that attain effects opposite to each other during the operation are arranged on the end surface of the driving bristle retainer, and protrusions that cooperate with the bevel faces are arranged on the corresponding end surface of the driven bristle retainer driven by the driving bristle retainer;
wherein the first bevel face is arranged on an upper end face of the driving bristle retainer in upward direction parallel to the axis of the head driving shaft, the second bevel face is arranged on a lower end face of the driving bristle retainer opposite to the upper end face, and both of the first bevel face and the second bevel face are on the same side in relation to the axis of the head driving shaft; and
wherein when the first bevel face cooperates with the corresponding protrusion arranged on the corresponding driven bristle retainer to drive the driven bristle retainer to move, the second bevel face will cooperate with the corresponding protrusion arranged on the corresponding driven bristle retainer, without interference with the movement of the driven bristle retainer.

9. The head structure as described in claim 6 or 7,
wherein at least two bevel faces that attain effects opposite to each other during the operation are arranged on the end surface of the driving bristle retainer, and protrusions that cooperate with the bevel faces are arranged on the corresponding end surface of the driven bristle retainer driven by the driving bristle retainer;
wherein both of the first bevel face and the second bevel face are arranged on an upper end face of the driving bristle retainer in upward direction parallel to the axis of the head driving shaft or both of them are arranged on a lower end face of the driving bristle retainer opposite to the upper end face, and the first bevel face and the second bevel face arranged on the upper end face or the lower end face are on different sides in relation to the axis of the head driving shaft; and
wherein when the first bevel face cooperates with the corresponding protrusion arranged on the corresponding driven bristle retainer to drive the driven bristle retainer to move, the second bevel face will cooperate with the corresponding protrusion arranged on the corresponding driven bristle retainer, without interference with the movement of the driven bristle retainer.

10. The head structure as described in claim 6 or 7,
wherein the driving bristle retainer has a plurality of bevel faces in groups;
wherein the first group of bevel faces is arranged on a lower end face of the driving bristle retainer in downward direction parallel to the axis of the head driving shaft, in bilateral symmetry in relation to the axis of the head driving shaft, while the second group of bevel faces is arranged on an upper end face of the driving bristle retainer opposite to the lower end face, in bilateral symmetry in relation to the axis of the head driving shaft; and
wherein the first group of bevel faces is symmetric in relation to a plane that contains the center line of the corresponding driving bristle retainer in the thickness direction, i.e., the upward or downward direction parallel to the axis of the head driving shaft, and is perpendicular to the axis of the head driving shaft, and the second group of bevel faces is formed by the first group of bevel faces when the first group of bevel faces revolves by 180° around the axis of the head driving shaft in clockwise direction.

11. The head structure as described in any of the claims 1, 2, 6 and 7,
wherein the movement axes of the driven bristle retainers are perpendicular to the axis of the head driving shaft.

12. The head structure as described in any of the claims 1, 2, 6 and 7,
wherein the driving bristle retainers swing around the axis of the head driving shaft, and the driven bristle retainers swing around their respective movement axes.

13. The head structure as described in claim 12, wherein the driving bristle retainers revolves around the axis of the head driving shaft by an angle γ, and accordingly the driven bristle retainers revolve around their respective movement axes by an angle σ.

14. The head structure as described in claim 13, wherein the angle γ is 30°∼70°, and the angle σ is 1°∼8°.

15. The head structure as described in claim 14, wherein the angle γ is 60°, and the angle σ is 4°.

## Patentansprüche

1. Kopfstruktur einer Bürstenvorrichtung, umfassend:
einen Rahmen (32), der beweglich mit einer Kopfantriebswelle (12) verbunden ist;
mindestens eine mit der Kopfantriebswelle (12) verbundene und durch die Kopfantriebswelle angetriebene Antriebsborstenhalterung (23-1, 23-2, 23-3, 23-3, 23-4), die ausgebildet ist, um Borsten (25, 27), die darauf angebracht sind, aufzunehmen; und
eine oder mehrere angetriebene Borstenhalterungen (21-1, 21-2, 21-3), die und die Antriebsborstenhalterungen (23-1, 23-2, 23-3, 23-3, 23-4) abwechselnd zueinander angeordnet sind, und die ausgebildet sind, um Borsten (25, 27), die darauf angebracht sind, aufzunehmen;
wobei, die eine oder mehreren angetriebenen Borstenhalterungen durch die Antriebsborstenhalterungen unter der Beschränkung des Rahmens (32) angetrieben wird/werden, um sich um ihre jeweiligen Bewegungsachsen zu bewegen; mindestens eine der Antriebsborstenhalterungen weist mindestens einen Vorsprung (233, 234, 235, 236) auf einer Endoberfläche entlang ihrer Längsachse auf, und die eine oder mehreren angetriebenen Borstenhalterungen weist/weisen mindestens eine Abfasungsfläche (213, 214, 215, 216) auf, die mit den Vorsprüngen an ihrer/ihren Endoberflächen zusammenwirkt, wobei die eine oder mehreren angetriebenen Borstenhalterungen durch die Antriebsborstenhalterungen angetrieben wird/werden; und mindestens eine angetriebene Stelle an mindestens einer der mindestens einen Abfasungsfläche ist näher an der Antriebsborstenhalterung als die Kontaktstelle, die Kontaktlinie, oder die Kontaktebene zwischen der Abfasungsfläche und dem entsprechenden Vorsprung, sodass die angetriebene Borstenhalterung (21-1, 21-2, 21-3) durch die Antriebsborstenhalterung (23-1, 23-2, 23-3, 23-4) im Bewegungsablauf angetrieben wird.

2. Kopfstruktur nach Anspruch 1, wobei sich die Kopfantriebswelle bewegt, da die Halterantriebswelle der Bürstenvorrichtung von einem Elektromotor zum Bewegen angetrieben wird.

3. Kopfstruktur nach einem der Ansprüche 1 oder 2,
wobei mindestens zwei Vorsprünge, die während des Betriebes entgegengesetzte Wirkungen erzielen, an der Endoberfläche der Antriebsborstenhalterung angeordnet sind, und Abfasungsflächen, die mit den Vorsprüngen zusammenwirken, auf der entsprechenden Endoberfläche der angetriebenen Borstenhalterung angeordnet sind, die von der Antriebsborstenhalterung angetrieben wird;
wobei der erste Vorsprung auf einer oberen Endfläche der Antriebsborstenhalterung in Aufwärtsrichtung parallel zu der Achse der Kopfantriebswelle angeordnet ist, der zweite Vorsprung auf einer unteren Endfläche der Antriebsborstenhalterung gegenüber der oberen Endfläche angeordnet ist, und beide der erste Vorsprung und der zweite Vorsprung auf derselben Seite in Bezug auf die Achse der Kopfantriebswelle sind; und
wobei, wenn der erste Vorsprung mit der entsprechenden Abfasungsfläche zusammenwirkt, die auf der entsprechenden angetriebenen Borstenhalterung angeordnet ist, um die angetriebene Borstenhalterung zum Bewegen anzutreiben, wirkt der zweite Vorsprung mit der entsprechenden Abfasungsfläche zusammen, die auf der entsprechenden angetriebenen Borstenhalterung angeordnet ist, ohne Beeinträchtigung der Bewegung der angetriebenen Borstenhalterung.

4. Kopfstruktur nach einem der Ansprüche 1 oder 2,
wobei mindestens zwei Vorsprünge, die während des Betriebs entgegengesetzte Wirkungen erzielen, auf der Endoberfläche der Antriebsborstenhalterung angeordnet sind, und Abfasungsflächen, die mit den Vorsprüngen zusammenwirken, auf der entsprechenden Endoberfläche der angetriebenen Borstenhalterung angeordnet sind, die von der Antriebsborstenhalterung angetrieben wird;
wobei, beide der erste Vorsprung und der zweite Vorsprung auf einer oberen Endfläche der Antriebsborstenhalterung in Aufwärtsrichtung parallel zu der Achse der Kopfantriebswelle angeordnet sind oder beide auf einer unteren Endfläche der Antriebsborstenhalterung gegenüber der oberen Endfläche angeordnet sind, und der erste Vorsprung und der zweite Vorsprung, die auf der oberen Endfläche oder der unteren Endfläche angeordnet sind, auf verschiedenen Seiten in Bezug auf die Achse der Kopfantriebswelle sind; und
wobei, wenn der erste Vorsprung und die entsprechende Abfasungsfläche, die auf der entsprechenden angetriebenen Borstenhalterung angeordnet ist, zusammenwirken, um die angetriebene Borstenhalterung zum Bewegen anzutreiben, wirkt der zweite Vorsprung und die entsprechende Abfasungsfläche zusammen, die auf der entsprechenden angetriebenen Borstenhalterung angeordnet ist, ohne Beeinträchtigung der Bewegung der angetriebenen Borstenhalterung.

5. Kopfstruktur nach einem der Ansprüche 1 oder 2,
wobei die Antriebsborstenhalterung eine Vielzahl von Vorsprüngen in Gruppen aufweist;
wobei die erste Gruppe von Vorsprüngen in vorstehender Richtung entgegengesetzt zu der zweiten Gruppe von Vorsprüngen ist;
wobei die erste Gruppe von Vorsprüngen auf einer oberen Endfläche der Antriebsborstenhalterung in Aufwärtsrichtung parallel zu der Achse der Kopfantriebswelle, in bilateraler Symmetrie in Bezug auf die Achse der Kopfantriebswelle angeordnet ist, während die zweite Gruppe von Vorsprüngen auf einer unteren Endfläche der Antriebsborstenhalterung gegenüber der oberen Endfläche, in bilateraler Symmetrie in Bezug auf die Achse der Kopfantriebswelle angeordnet ist; und
wobei in der ersten Gruppe und in der zweiten Gruppe von Vorsprüngen die Vorsprünge, die in vorstehende Richtung zueinander entgegengesetzt und auf derselben Seite in Bezug auf die Achse der Kopfantriebswelle sind, symmetrisch in Bezug auf eine Ebene sind, die die Mittellinie der entsprechenden Antriebsborstenhalterung in der Dickenrichtung enthält, d.h., die Aufwärts-oder Abwärtsrichtung parallel zu der Achse der Kopfantriebswelle, und ist senkrecht zu der Achse der Kopfantriebswelle.

6. Kopfstruktur einer Bürstenvorrichtung, umfassend:
einen Rahmen (32), der beweglich mit einer Kopfantriebswelle (12) verbunden ist;
mindestens eine mit der Kopfantriebswelle verbundene und durch die Kopfantriebswelle angetriebene Antriebsborstenhalterung (23-1, 23-2, 23-3, 23-4), die ausgebildet ist, um Borsten (25, 27), die darauf angebracht sind, aufzunehmen; und
eine oder mehrere angetriebene Borstenhalterungen (21-1, 21-2, 21-3, 21-4), die und die Antriebsborstenhalterungen abwechselnd zueinander angeordnet sind, und die ausgebildet sind, um Borsten, die darauf aufgebracht sind, aufzunehmen, wobei die angetriebenen Borstenhalterungen durch die Antriebsborstenhalterungen unter der Beschränkung des Rahmens angetrieben werden, um sich um ihre jeweiligen Bewegungsachsen zu bewegen; mindestens eine der Antriebsborstenhalterungen weist mindestens eine Abfasungsfläche (213, 214, 215, 216) auf einer Endoberfläche entlang ihrer Längsachse auf, und die eine oder mehreren angetriebenen Borstenhalterung weist/weisen mindestens einen Vorsprung (233, 234, 235, 236) auf, der mit der mindestens einen Abfasungsfläche an ihrer/ihren Endoberflächen zusammenwirkt, wobei die eine oder mehreren angetriebenen Borstenhalterungen durch die Antriebsborstenhalterung angetrieben wird/werden; und mindestens eine angetriebene Stelle an mindestens einer der mindestens einen Abfasungsfläche ist näher an der Antriebsborstenhalterung als die Kontaktstelle, die Kontaktlinie oder die Kontaktebene zwischen der Abfasungsfläche und dem entsprechenden Vorsprung, sodass die eine oder mehreren angetriebene Borstenhalterung (21-1, 21-2, 21-3) durch die Antriebsborstenhalterungen (23-1, 23-2, 23-3, 23-4) im Bewegungsablauf angetrieben wird/werden.

7. Die Kopfstruktur nach Anspruch 6, wobei sich die Kopfantriebswelle bewegt, da die Halteantriebswelle der Bürstenvorrichtung von einem Elektromotor zum Bewegen angetrieben wird.

8. Kopfstruktur nach einem der Ansprüche 6 oder 7, wobei mindestens zwei Abfasungsflächen, die während des Betriebes entgegengesetzte Wirkungen erzielen, an der Endoberfläche der Antriebsborstenhalterung angeordnet sind, und Vorsprünge, die mit den Abfasungsflächen zusammenwirken, auf der entsprechenden Endoberfläche der angetriebenen Borstenhalterung angeordnet sind, die von der Antriebsborstenhalterung angetrieben wird;
wobei die erste Abfasungsfläche auf einer oberen Endfläche der Antriebsborstenhalterung in Aufwärtsrichtung parallel zu der Achse der Kopfantriebswelle angeordnet ist, die zweite Abfasungsfläche auf einer unteren Endfläche der Antriebsborstenhalterung gegenüber der oberen Endfläche angeordnet ist, und beide die erste Abfasungsfläche und die zweite Abfasungsfläche auf der selben Seite in Bezug auf die Achse der Kopfantriebswelle sind; und
wobei, wenn die erste Abfasungsfläche mit dem entsprechenden Vorsprung zusammenwirkt, der auf der entsprechenden angetriebenen Borstenhalterung angeordnet ist, um die angetriebene Borstenhalterung zum Bewegen anzutreiben, wirkt die zweite Abfasungsfläche mit dem entsprechenden Vorsprung zusammen, der auf der entsprechenden angetriebenen Borstenhalterung angeordnet ist, ohne Beeinträchtigung der Bewegung der angetrieben Borstenhalterung.

9. Kopfstruktur nach einem der Ansprüche 6 oder 7,
wobei mindestens zwei Abfasungsflächen, die während des Betriebs entgegengesetzte Wirkungen erzielen, auf der Endoberfläche der Antriebsborstenhalterung angeordnet sind, und Vorsprünge, die mit den Abfasungsflächen zusammenwirken, auf der entsprechenden Endoberfläche der angetriebenen Borstenhalterung angeordnet sind, die von der Antriebsborstenhalterung angetrieben wird;
wobei, beide die erste Abfasungsfläche und die zweite Abfasungsfläche auf einer oberen Endfläche der Antriebsborstenhalterung in Aufwärtsrichtung parallel zu der Achse der Kopfantriebswelle angeordnet sind oder beide auf einer unteren Endfläche der Antriebsborstenhalterung gegenüber der oberen Endfläche angeordnet sind, und die erste Abfasungsfläche und die zweite Abfasungsfläche, die auf der oberen Endfläche oder der unteren Endfläche angeordnet sind, auf verschiedenen Seiten in Bezug auf die Achse der Kopfantriebswelle angeordnet sind; und
wobei, wenn die erste Abfasungsfläche mit dem entsprechenden Vorsprung zusammenwirkt, der auf der entsprechenden angetriebenen Borstenhalterung angeordnet ist, um die angetriebene Borstenhalterung zum Bewegen anzutreiben, wirkt die zweite Abfasungsfläche mit dem entsprechenden Vorsprung zusammen, der auf der entsprechenden angetriebenen Borstenhalterung angeordnet ist, ohne Beeinträchtigung der Bewegung der angetriebenen Borstenhalterung.

10. Kopfstruktur nach einem der Ansprüche 6 oder 7,
wobei die Antriebsborstenhalterung eine Vielzahl von Abfasungsflächen in Gruppen aufweist;
wobei die erste Gruppe von Abfasungsflächen auf einer unteren Endfläche der Antriebsborstenhalterung in Abwärtsrichtung parallel zu der Achse der Kopfantriebswelle, in bilateraler Symmetrie zu der Achse der Kopfantriebswelle angeordnet ist, während die zweite Gruppe von Abfasungsflächen auf einer oberen Endfläche der Antriebsborstenhalterung gegenüber der unteren Endfläche, in bilateraler Symmetrie zu der Achse der Kopfantriebswelle angeordnet ist; und wobei die erste Gruppe von Abfasungsflächen symmetrisch in Bezug auf eine Ebene ist, die die Mittellinie der entsprechenden Antriebsborstenhalterung in Dickenrichtung enthält, d.h. die Aufwärts-oder Abwärtsrichtung parallel zu der Achse der Kopfantriebswelle, und ist senkrecht zu der Achse der Kopfantriebswelle, und die zweite Gruppe von Abfasungsflächen durch die erste Gruppe von Abfasungsflächen gebildet wird, wenn die erste Gruppe von Abfasungsflächen um 180° um die Achse der Kopfantriebswelle im Uhrzeigersinn rotiert.

11. Die Kopfstruktur nach einem der Ansprüche 1, 2, 6 und 7, wobei die Bewegungsachsen der angetriebenen Borstenhalterungen senkrecht zu der Achse der Kopfantriebswelle sind.

12. Kopfstruktur nach einem der Ansprüche 1, 2, 6 und 7, wobei die Antriebsborstenhalterungen um die Achse der Kopfantriebswelle schwingen, und die angetriebenen Borstenhalterungen um ihre jeweiligen Bewegungsachsen schwingen.

13. Kopfstruktur nach Anspruch 12, wobei die Antriebsborstenhalterungen um die Achse der Kopfantriebswelle in einem Winkel γ rotieren, und entsprechend die angetriebenen Borstenhalterungen um ihre jeweiligen Bewegungsachsen in einem Winkel σ rotieren.

14. Kopfstruktur nach Anspruch 13, wobei der Winkel γ 30°∼70°, und der Winkel σ 1°∼8° beträgt.

15. Kopfstruktur nach Anspruch 14, wobei der Winkel γ ist 60°, und der Winkel σ 4° beträgt.

## Revendications

1. Structure de tête d'un appareil à brosse, comprenant :
un châssis (32) connecté de façon mobile avec un arbre d'entraînement de tête (12) ;
au moins un système de retenue de poils d'entraînement (23-1, 23-2, 23-3, 23-4) connecté avec l'arbre d'entraînement de tête (12) et entraîné par l'arbre d'entraînement de tête, conçu pour recevoir des poils (25, 27) montés sur ceux-ci ; et
un ou plusieurs systèmes de retenue de poils entraînés (21-1, 21-2, 21-3), lesquels et les systèmes de retenue de poils d'entraînement (23-1, 23-2, 23-3, 23-4) sont agencés de façon alternée les uns avec les autres, et conçus pour recevoir des poils (25, 27) montés sur celui-ci/ceux-ci,
dans laquelle le un ou les systèmes de retenue de poils entraînés sont entraînés par les systèmes de retenue de poils d'entraînement sous la contrainte du châssis (32) pour bouger autour de leurs axes de mouvement respectifs ; au moins un des systèmes de retenue de poils d'entraînement a au moins une saillie (233, 234, 235, 236) sur une surface d'extrémité le long de son axe longitudinal, et le un ou les systèmes de retenue de poils entraînés ont au moins une face en biseau (213, 214, 215, 216) qui coopère avec les saillies sur leurs surfaces d'extrémité où le un ou les systèmes de retenue de poils entraînés sont entraînés par les systèmes de retenue de poils d'entraînement ; et au moins un point entraîné sur au moins une des au moins une face en biseau est plus proche du système de retenue de poils d'entraînement que du point de contact, la ligne de contact ou le plan de contact entre la face en biseau et la saillie correspondante, de sorte que le système de retenue de poils entraînés (21-1, 21-2, 21-3) est entraîné par le système de retenue de poils d'entraînement (23-1, 23-2, 23-3, 23-4) dans le processus de mouvement.

2. Structure de tête selon la revendication 1,
dans laquelle l'arbre d'entraînement de tête bouge lorsque l'arbre d'entraînement de support de l'appareil à brosse est entraîné par un moteur électrique pour bouger.

3. Structure de tête selon la revendication 1 ou 2,
dans laquelle au moins deux saillies qui atteignent des effets opposés l'un à l'autre pendant le fonctionnement sont agencées sur la surface d'extrémité du système de retenue de poils d'entraînement, et les faces en biseau qui coopèrent avec les saillies sont agencées sur la surface d'extrémité correspondante du système d'entraînement de poils entraînés entraînés par le système de retenue de poils d'entraînement ;
dans laquelle la première saillie est agencée sur une surface d'extrémité supérieure du système de retenue de poils d'entraînement dans le sens montant parallèle à l'axe de l'arbre d'entraînement de tête, la deuxième saillie est agencée sur une face d'extrémité inférieure du système de retenue de poils d'entraînement opposé à la face d'extrémité supérieure, et à la fois la première saillie et la deuxième saillie sont sur le même côté par rapport à l'axe de l'arbre d'entraînement de tête ; et
dans laquelle lorsque la première saillie coopère avec la face en biseau correspondante agencée sur le système de retenue de poils entraînés correspondant pour amener le système de retenue de poils entraînés à bouger, la deuxième saillie coopère avec la face en biseau correspondante agencée sur le système de retenue de poils entraînés correspondant sans interférence avec le mouvement du système de retenue de poils entraînés.

4. Structure de tête selon la revendication 1 ou 2,
dans laquelle au moins deux saillies qui atteignent des effets opposés l'un à l'autre pendant le fonctionnement sont agencées sur la surface d'extrémité du système de retenue de poils d'entraînement, et les faces en biseau qui coopèrent avec les saillies sont agencées sur la surface d'extrémité correspondante du système de retenue de poils entraînés entraînés par le système de retenue de poils d'entraînement ;
dans laquelle à la fois la première saillie et la deuxième saillie sont agencées sur une face d'extrémité supérieure du système de retenue de poils d'entraînement dans le sens montant parallèle à l'axe de l'arbre d'entraînement de tête ou les deux sont agencées sur une face d'extrémité inférieure du système de retenue de poils d'entraînement opposée à la face d'extrémité supérieure, et la première saillie et la deuxième saillie agencées sur la face d'extrémité supérieure ou sur la face d'extrémité inférieure sont sur des côtés différents par rapport à l'axe d'entraînement de tête ; et
dans laquelle lorsque la première saillie et la face en biseau correspondante agencée sur le système de retenue de poils entraînés coopèrent pour amener le système de retenue à bouger, la deuxième saillie et la face en biseau correspondante agencée sur le système de retenue de poils correspondant coopèrent, sans interférence avec le mouvement du système de retenue de poils entraînés.

5. Structure de tête selon la revendication 1 ou 2,
dans laquelle le système de retenue de poils d'entraînement a une pluralité de saillies en groupes ;
dans laquelle le premier groupe de saillies est opposé dans le sens de saillie au deuxième groupe de saillies ;
dans laquelle le premier groupe de saillies est agencé sur une face d'extrémité supérieure du système de retenue de poils d'entraînement dans un sens montant parallèle à l'axe de l'arbre d'entraînement de tête, en symétrie bilatérale par rapport à l'axe de l'arbre d'entraînement de tête, tandis que le deuxième groupe de saillies est agencé sur une face d'extrémité inférieure du système de retenue de poils d'entraînement opposé à la face d'extrémité supérieure, en symétrie bilatérale par rapport à l'axe de l'arbre d'entraînement de tête ; et
dans laquelle dans les premier groupe et deuxième groupe de saillies, les saillies qui sont opposées dans le sens de saillie les unes aux autres et sur le même côté par rapport à l'axe de l'arbre d'entraînement de tête sont symétriques par rapport à un plan qui contient la ligne centrale du système de retenue de poils d'entraînement correspondant dans le sens de l'épaisseur, c'est-à-dire le sens montant ou descendant parallèle à l'axe de l'arbre d'entraînement de tête et est perpendiculaire à l'axe de l'arbre d'entraînement de tête.

6. Structure de tête d'un appareil à brosse, comprenant :
un châssis (32) connecté de façon mobile à un arbre d'entraînement de tête (12) ;
au moins un système de retenue de poils d'entraînement (23-1, 23-2, 23-3, 23-4) connecté avec l'arbre d'entraînement de tête et entraîné par l'arbre d'entraînement de tête, conçu pour recevoir des poils (25, 27) montés sur ceux-ci ; et
un ou plusieurs systèmes de retenue de poils entraînés (21-1, 21-2, 21-3, 21-4), lesquels et les systèmes de retenue de poils d'entraînement sont agencés de façon alternée les uns avec les autres, et conçus pour recevoir des poils montés sur celui-ci/ceux-ci,
dans laquelle les systèmes de retenue de poils entraînés sont entraînés par les systèmes de retenue de poils d'entraînement sous la contrainte du châssis pour bouger autour de leurs axes de mouvement respectifs ;
au moins un des systèmes de retenue de poils d'entraînement a au moins une face en biseau (213, 214, 215, 216) sur une surface d'extrémité le long de son axe longitudinal, et le un ou les systèmes de retenue de poils entraînés ont au moins une saillie (233, 234, 235, 236) qui coopère avec l'au moins une face en biseau sur ses surfaces d'extrémité où les un ou plusieurs systèmes de retenue de poils entraînés sont entraînés par le système de retenue de poils d'entraînement ; et au moins un point entraîné sur au moins une des au moins une face en biseau est plus proche du système de retenue de poils d'entraînement que du point de contact, la ligne de contact ou le plan de contact entre la face en biseau et la saillie correspondante, de sorte que le un ou les systèmes de retenue de poils entraînés sont entraînés par les systèmes de retenue de poils entraînés dans le processus de mouvement.

7. Structure de tête selon la revendication 6,
dans laquelle l'arbre d'entraînement de tête bouge lorsque l'arbre d'entraînement de retenue de l'appareil à brosse est entraîné par un moteur électrique pour bouger.

8. Structure de tête selon la revendication 6 ou 7,
dans laquelle au moins deux faces en biseau qui atteignent des effets opposés l'un à l'autre pendant le fonctionnement sont agencées sur la surface d'extrémité du système de retenue de poils d'entraînement, et les saillies qui coopèrent avec les faces en biseau sont agencées sur la surface d'extrémité correspondante du système de retenue de poils entraînés entraînés par le système de retenue de poils d'entraînement ;
dans laquelle la première face en biseau est agencée sur une face d'extrémité supérieure du système de retenue de poils d'entraînement dans le sens montant parallèle à l'axe de l'arbre d'entraînement de tête, la deuxième face en biseau est agencée sur une face d'extrémité inférieure du système de retenue de poils d'entraînement opposée à la face d'extrémité supérieure, et à la fois la première face en biseau et la deuxième face en biseau sont sur le même côté par rapport à l'axe de l'arbre d'entraînement de tête ; et
dans laquelle lorsque la première face en biseau coopère avec la saillie correspondante agencée sur le système de retenue de poils entraînés correspondant pour amener le système de retenue de poils entraînés à bouger, la deuxième face en biseau coopère avec la saillie correspondante agencée sur le système de retenue de poils entraînés correspondant, sans interférence avec le mouvement du système de retenue de poils entraînés.

9. Structure de tête selon la revendication 6 ou 7,
dans laquelle au moins deux faces en biseau qui atteignent des effets opposés l'un à l'autre pendant le fonctionnement sont agencées sur la surface d'extrémité du système de retenue de poils d'entraînement, et des saillies qui coopèrent avec les faces en biseau sont agencées sur la surface d'extrémité correspondante du système de retenue de poils entraînés par le système de retenue de poils d'entraînement ;
dans laquelle à la fois la première face en biseau et la deuxième face en biseau sont agencées sur une face d'extrémité supérieure du système de retenue de poils d'entraînement dans le sens montant parallèle à l'axe de l'arbre d'entraînement de tête ou les deux sont agencées sur une face d'extrémité inférieure du système de retenue de poils d'entraînement opposée à la face d'extrémité supérieure, et la première face en biseau et la deuxième face en biseau agencées sur la face d'extrémité supérieure ou la face d'extrémité inférieure sont sur des côtés différents par rapport à l'axe de l'arbre d'entraînement de tête ; et
dans laquelle lorsque la première face en biseau coopère avec la saillie correspondante agencée sur le système de retenue de poils entraînés correspondant pour amener le système de retenue de poils entraînés à bouger, la deuxième face en biseau coopère avec la saillie correspondante agencée sur le système de retenue de poils entraînés correspondant, sans interférence avec le mouvement du système de retenue de poils entraînés.

10. Structure de tête selon la revendication 6 ou 7,
dans laquelle le système de retenue de poils d'entraînement a une pluralité de faces en biseau en groupes ;
dans laquelle le premier groupe de faces en biseau est agencé sur une face d'extrémité inférieure du système de retenue de poils d'entraînement dans le sens descendant parallèle à l'axe de l'arbre d'entraînement de tête, en symétrie bilatérale par rapport à l'axe de l'arbre d'entraînement de tête, tandis que le deuxième groupe de faces en biseau est agencé sur une face d'extrémité supérieure du système de retenue de poils d'entraînement opposée à la face d'extrémité inférieure, en symétrie bilatérale par rapport à l'axe de l'arbre d'entraînement de tête ; et
dans laquelle le premier groupe de faces en biseau est symétrique par rapport à un plan qui contient la ligne centrale du système de retenue de poils d'entraînement correspondant dans le sens de l'épaisseur, c'est-à-dire, le sens montant ou descendant parallèle à l'axe de l'arbre d'entraînement de tête, et est perpendiculaire à l'axe de l'arbre d'entraînement de tête, et le deuxième groupe de faces en biseau est formé par le premier groupe de faces en biseau lorsque le premier groupe de faces en biseau effectue une rotation à 180° autour de l'axe de l'arbre d'entraînement de tête dans le sens horaire.

11. Structure de tête selon l'une quelconque des revendications 1, 2, 6 et 7, dans laquelle les axes de mouvement des systèmes de retenue de poils entraînés sont perpendiculaires à l'axe de l'arbre d'entraînement de tête.

12. Structure de tête selon l'une quelconque des revendications 1, 2, 6 et 7, dans laquelle les systèmes de retenue de poils d'entraînement basculent autour de l'axe de l'arbre d'entraînement de tête et les systèmes de retenue de poils entraînés basculent autour de leurs axes de mouvement respectifs.

13. Structure de tête selon la revendication 12, dans laquelle les systèmes de retenue de poils d'entraînement effectuent une rotation autour de l'axe de l'arbre d'entraînement de tête d'un angle y, et par conséquent les systèmes de retenue de poils entraînés effectuent une rotation autour de leurs axes de mouvement respectifs d'un angle σ.

14. Structure de tête selon la revendication 13, dans laquelle l'angle γ est de 30°∼70°, et l'angle σ est de 1°∼8°.

15. Structure de tête selon la revendication 14, dans laquelle l'angle γ est de 60°, et l'angle σ est de 4°.
